# EUROPEAN PATENT APPLICATION

(11) **EP 2 940 274 A1**
(43) Date of publication of application: **04.11.2015**
(21) Application number: 13869110.0
(22) Date of filing: 19.12.2013
(51) Int. Cl.: F02D 21/02, F02D 21/06, F02M 33/00

(54) **INTERNAL COMBUSTION ENGINE**

(30) Priority: 28.12.2012 JP 2012286942; 01.03.2013 JP 2013041140
(71) Applicant: TonenGeneral Sekiyu Kabushiki Kaisha, Tokyo 108-8005 (JP)
(72) Inventor: KOSEKI Keiichi, Kawasaki-shi Kanagawa 210-9526 (JP); NAIKI Taketora, Kawasaki-shi Kanagawa 210-9526 (JP)
(74) Representative: De Vries & Metman
(86) International application number: PCT/JP2013/084026
(87) International publication number: WO 2014/103853

(57) **Abstract**

PURPOSE: The present invention provides an internal-combustion engine which supplies power by subjecting a fuel oil to combustion and makes it possible to reduce amounts of exhaust gases such as NOX and THC.

CONSTITUTION: An internal-combustion engine, characterized in that the engine comprises a combustion chamber which is adapted so that a fuel oil and gas comprising 65% by volume or more of oxygen are subjected to combustion in the combustion chamber.

## Description

### FIELD OF THE INVENTION

The present invention relates to an internal-combustion engine with reduced amounts of exhaust gases such as nitrogen oxide (NOX) and hydrocarbons, to a method for operating the engine and to a diesel locomotive equipped with the engine.

### BACKGROUND OF THE INVENTION

In internal-combustion engines, in particular, automotive engines, which supply power by combusting a fuel oil such as gasoline, the fuel oil is mixed with air and then combusted. Air comprises nitrogen molecules in an amount of 78.0% by volume. During the combustion, the nitrogen molecules are converted into nitrogen oxides (NOX) such as nitric oxide, nitrogen dioxide and its dimer, and dinitrogen trioxide, which nitrogen oxides are emitted in a significant and problemic amount. Further, nitrogen in air decreases activity of oxygen in the combustion and, as a result, some hydrocarbons are unburned in a combustion chamber. The unburned hydrocarbons are emitted as exhaust gases. In order to reduce the amounts of NOX and total hydrocarbons (THC), three-way catalysts and NOX storage-reduction catalysts have been used.

The three-way catalysts need that the amounts of a fuel oil and air meet a theoretical air-fuel ratio (stoichiometric ratio) and strict temperature control in order to sufficiently exhibit its effects. Further, the catalysts need expensive noble metals such as platinum and rhodium.

An engine which supplies power by combusting hydrogen as a fuel is also known (see the following Patent Literatures 1 and 2). In this engine, hydrogen is combusted with oxygen in the presence of a working gas, argon. The engine has a very high thermal efficiency. No nitrogen is used in the engine, either. Therefore, the engine does not emit NOX. However, hydrogen has a high risk of explosion and, therefore, the engine must be carefully handled. Therefore, the engine is not easily operated.

### PRIOR ART LITERATURES

### PATENT LITERATURES

Patent Literature 1: Japanese Patent Application Laid-Open No. Hei 11-93681/1999
Patent Literature 2: Japanese Patent Application Laid-Open No. 2009-68392

### SUMMARY OF THE INVENTION

An object of the present invention is to provide an internal-combustion engine which supplies power by combusting a fuel oil with a reduced amount of exhaust gases such as NOX and THC.

The present inventors have found that the aforesaid purpose is achieved by substituting gas comprising 65% by volume or more of oxygen for air which has conventionally been used in the combustion of a fuel oil.

Thus, the present invention is an internal-combustion engine, characterized in that the engine comprises a combustion chamber which is adapted so that a fuel oil and gas comprising 65% by volume or more of oxygen are subjected to combustion in the combustion chamber.

This invention also provides a method for operating the internal-combustion engine, wherein gas comprising oxygen, nitrogen and optionally a noble gas is fed together with a fuel oil to a combustion chamber when starting the engine, wherein an amount of the oxygen is 10 to 50% by volume relative to the total volume of the gas, an amount of the nitrogen is 50 to 90% by volume relative to the total volume of the gas, and an amount of the noble gas is 0 to 20% by volume relative to the total volume of the gas; and then when the operation of the engine reaches a steady state, the amount of oxygen is adjusted to 65% by volume or more relative to the total volume of the gas; and a diesel locomotive equipped with the internal-combustion engine.

### EFFECTS OF THE INVENTION

The present internal-combustion engine works with a reduced amount of exhaust gases such as NOX and THC and, therefore, does not need a three-way catalyst or an NOX storage-reduction catalyst. Further, the present internal-combustion engine is suitably used in vehicles such as diesel locomotives and automobiles.

### BRIEF EXPLANATION OF THE DRWAING

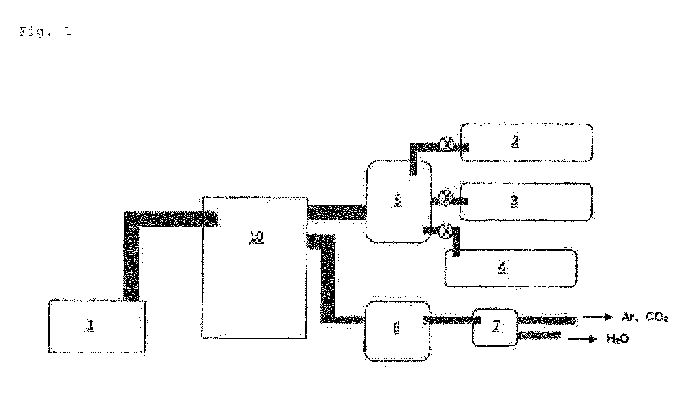

[Fig. 1] Fig. 1 is a schematic view of the internal-combustion engine system used in the Examples.

### EMBODIMENTS OF THE INVENTION

Fig. 1 shows one example of a system comprising the present internal-combustion engine. The present internal-combustion engine 10 comprises a combustion chamber. In the combustion chamber, a fuel oil is fed from fuel tank 1 and combusted with gas fed via preserver 5. The gas comprises 65% by volume or more of oxygen when the combustion is in a steady condition. The gas preferably comprises no nitrogen from a standpoint of decreasing the amount of NOX.

In order to start the present internal-combustion engine in a more stable manner, it is preferred to feed gas comprising nitrogen and optionally a noble gas as well as oxygen to the combustion chamber when the engine is started, i.e., the combustion is started. The amount of oxygen is preferably 10 to 50% by volume, more preferably 10 to 40% by volume, relative to the total volume of the gas. The amount of nitrogen is preferably 50 to 90% by volume, more preferably 60 to 90% by volume, relative to the total volume of the gas. The amount of the noble gas is preferably 0 to 20% by volume, more preferably 0 to 15% by volume, relative to the total volume of the gas. The noble gas is one or more of the elements of group 18 of the periodic table, typically argon.

After the engine is started, the amount ratio of oxygen in the gas may be increased gradually or in a stepwise manner. When the operation of the engine reaches a steady state, typically, 10 to 30 seconds after the start of the engine, gas comprising 65% by volume or more of oxygen, preferably 75 to 100% by volume, more preferably 85 to 100% by volume, still more preferably 90 to 100% by volume, most preferably 100% by volume, of oxygen may be subj ected to combustion, so that the operation can stably continue and the emission of NOX is decreased. In the conventional internal-combustion engine in which air is used, nitrogen which is contained in a large amount in air decreases activity of oxygen in the combustion and, as a result, some hydrocarbons are unburned in a combustion chamber. The unburned hydrocarbons are emitted as exhaust gases. On the contrary, gas comprising 65% by volume or more of oxygen is used in the present internal-combustion engine. Therefore, a smaller amount of hydrocarbons remain unburned and, accordingly, the amount of emitted total hydrocarbons (THC) is decreased and the combustion efficiency is higher.

When the operation reaches a steady state, the gas to be fed may comprise nitrogen and/or a noble gas to the extent that the present effects are not impaired. The amount of nitrogen may be 0 to 35% by volume, preferably 0 to 15% by volume, relative to the total volume of the gas. The amount of the noble gas may be 0 to 10% by volume, preferably 0 to 5% by volume, relative to the total volume of the gas. When the amounts of nitrogen and the noble gas are in these ranges, the engine may attain an effect of lowering the combustion temperature. Further, the emission amount of NOX is relatively small, even though the gas comprises nitrogen.

In order to make it possible to adjust the amount ratio of components of the gas when the engine is started and when the operation of the engine reaches a steady state and to decrease fluctuation in pressure so that the gas is stably fed to the combustion chamber, it is preferred to feed oxygen, nitrogen and a noble gas to the combustion chamber from each bomb for each gas, as shown in Fig. 1. Nitrogen may be fed from an air bomb in place of a nitrogen bomb, or in a naturally-aspirated manner. In Fig. 1, nitrogen, oxygen and a noble gas, argon, are fed to the combustion chamber from air bomb 2, oxygen bomb 3 and argon bomb 4, respectively, via preserver 5.

In the present internal-combustion engine, the gas to be subjected to combustion comprises 65% by volume or more of oxygen. As a result, the emission of NOX is significantly decreased and, therefore, any expensive three-way catalyst or NOX storage-reduction catalyst is not needed. This makes it possible to simplify an internal-combustion engine and to reduce costs. However, the use of these catalysts is not excluded in the present internal-combustion engine. A small amount of the three-way catalyst, another conventional catalyst or an adsorbent may be used as needed in the present internal-combustion engine.

The fuel oil which may be used in the present internal-combustion engine is not particularly limited. For example, use may be made of well-known gasoline base materials such as light naphtha, heavy naphtha, full range naphtha, cracked gasoline, light cracked gasoline, heavy cracked gasoline, reformed gasoline, light reformed gasoline, heavy reformed gasoline, alkylate gasoline, isomerate gasoline, straight-run gasoline and thermally cracked gasoline, and ones obtained by subjecting these materials to benzene-removal or desulfurization. Also, GTL naphtha obtained by Fischer-Tropsch synthesis and isomerate naphtha obtained by hydrocracking and isomerizing the GTL naphtha may be used. Use may also be made of kerosene base materials such as light cycle kerosene, hydrocracked kerosene, straight-run kerosene, vacuum kerosene, directly desulfurized kerosene and indirectly desulfurized kerosene, ones obtained by subjecting these materials to desulfurization, and GTL kerosene obtained by Fischer-Tropsch synthesis. Further, use may be made of gas oil base materials such as light cycle gas oil, hydrocracked gasoil, straight-run gas oil, vacuum gas oil, directly desulfurized gas oil and indirectly desulfurized gas oil, ones obtained by subjecting these materials to desulfurization, and GTL gas oil obtained by Fischer-Tropsch synthesis. These fuel oils may be used in a combination of two or more of these.

The fuel oils preferably have an initial boiling point of 30 to 100 degrees C and a final boiling point of at least 150 degrees C and lower than 270 degrees C, or an initial boiling point of 100 to 250 degrees C and a final boiling point of from 270 to 410 degrees C.

The former type of fuel oils having an initial boiling point of 30 to 100 degrees C and a final boiling point of at least 150 degrees C and lower than 270 degrees C include gasoline compositions, kerosene compositions and heavy gasoline compositions. Well-known gasoline compositions may be used. Further, the gasoline compositions to be used do not need to meet the Japanese Industrial Standards (JIS) on research octane number (RON), sulfur content, benzene content and Reid vapor pressure (RVP), though commercially available ones meet the JIS. In the conventional internal-combustion engines in which air is used, the aforesaid JIS must be met in view of exhaust emission control. On the contrary, the present internal-combustion engine uses gas comprising 65% by volume or more of oxygen in place of air. As a result, exhaust gases such as NOX and THC are emitted in greatly decreased amounts and, therefore, fuel oils which do not meet the JIS may also be used. For example, a catalyst such as a three-way catalyst is used in the conventional internal-combustion engine in which air is used, in order to reduce the amounts of exhaust gases such as NOX and THC. Then, if the sulfur content of the fuel oil exceeds the JIS, the catalyst is deactivated and, as a result, the exhaust gas regulations are not met. As described above, the present internal-combustion engine makes it possible to greatly reduce the amounts of exhaust gases such as NOX and THC and, therefore, a catalyst such as a three-way catalyst is unnecessary. Accordingly, a gasoline composition having a sulfur content which exceeds the JIS may be used. For the same reasons as described for the gasoline composition, well-known kerosene compositions may be used and the kerosene compositions to be used do not need to meet the JIS standards on sulfur content.

The heavy gasoline composition includes heavy reformed gasoline and a composition comprising heavy cracked gasoline and 50% by volume or more of heavy reformed gasoline. These heavy gasoline compositions are unusable, in view of exhaust emission control, in the conventional internal-combustion engines using air, but usable in the present internal-combustion engine because the amounts of exhaust gases such as NOX and THC are greatly reduced as described above.

Thus, fuel oils which do not meet the JIS may also be used in the present internal-combustion engine.

The fuel oil having an initial boiling point of 100 to 250 degrees C and a final boiling point of from 270 to 410 degrees C includes kerosene compositions which are different in composition from the aforesaid kerosene compositions, gas oil compositions and heavy gas oil compositions. Although gas oil compositions are classified into grade 1, grade 2, grade 3 and special grade 3 according to the JIS, the gas oil compositions to be used are not restricted to such grades of gas oil compositions. For example, even when the gas oil composition has a sulfur content higher than that according to the JIS, the composition may be used because the amounts of exhaust gases such as NOX and THC are very small in the present internal-combustion engine as described above. For the same reason, fuel oils having a final boiling point which is as high as 410 degrees C may also be used and, therefore, it is possible to effectively use high-boiling fractions.

The fuel oil to be used in the present internal-combustion engine may comprise oxygen-containing compounds. Examples of the oxygen-containing compounds include ethers such as methyl t-butyl ether (MTBE) and ethyl t-butyl ether (ETBE), and alcohols such as methanol, ethanol, 1-butanol, 2-butanol and isobutanol. A total amount of the oxygen-containing compounds in the fuel oil is preferably less than 35% by volume, more preferably less than 20% by volume, still more preferably less than 10% by volume, further preferably less than 7% by volume, but not limited thereto.

The present internal-combustion engine may be provided with a reformer for reforming the fuel oil, if necessary. This makes it possible to supply, to the internal-combustion engine, a fuel oil which is made heavy and has a good combustion efficiency. A whole of the fuel oil may be reformed, but only a part of the fuel oil may be reformed. A dehydrogenation catalyst may be placed in a reformer for dehydrogenation of a fuel oil. As the dehydrogenation catalyst, a supported platinum catalyst may be used which is as described, for example, in Japanese Patent Application Laid-Open 2006-257906. In the reformer, a fuel oil is reformed at a temperature of, for example, 250 degrees C or higher, preferably 300 degrees C or higher, in the presence of a dehydrogenation catalyst to dehydrogenate naphthenes into aromatic compounds so as to form hydrogen and a reformed fuel oil. The reaction conditions in the reformer may be the dehydrogenation reaction conditions described in "Features and future prospects of hydrogen storage and supply systems using organic hydrides", Ume zawa Junko, PETROTECH, the Japan Petroleum Institute, 29(4), 2006, pp. 253-257. In particular, reaction conditions of a temperature of 300 to 450 degrees C and a pressure of ordinary pressure to 1MPa are preferred.

In order to prevent knocking in the present internal-combustion engine, a compression ratio may be decreased, for example, to 8.5 or lower (and/or) an exit temperature of cooling water may be decreased, for example, to a temperature of 50 to 80 degrees C, as needed. In order to decrease resistance to an intake of oxygen, it is preferred to provide the internal-combustion engine with a buffer back which is expandable and shrinkable. In order to prevent backfire, it is preferred to operate the internal-combustion engine in a low rotation range, not to lower a negative intake pressure too much, for example, not to be 400mmHg or lower, and/or to adjust a valve clearance.

The present invention will be illustrated by the following Examples, but is not limited thereto.

### EXAMPLES

The internal-combustion engine system used in the Examples is shown in Fig. 1. Internal-combustion engine 10 is of four-cycle stroke type and has two cylinders having a total displacement of 359cc. A fuel oil was fed from fuel tank 1 to a combustion chamber of the internal-combustion engine 10, and gas components were fed from air bomb 2, oxygen bomb 3 and argon bomb 4 to preserver 5 and then to the combustion chamber. Exhaust gases were processed with oxidation catalyst 6 and then emitted through cooling tube 7. Exhaust gases predominantly contained argon gas and carbon dioxide. In addition, water was emitted as liquid. The amounts of NOX and TCH emitted were determined as follows.

### Determination of the amount of NOX emitted

It was confirmed visually and on a basis of a rotation number in an oscilloscope that the combustion reached a steady state. After 5 to 10 seconds, sampling of the exhaust gases was started by using a sampling bag. After ten seconds of the sampling, the sample gas was immediately introduced into a NOX detecting tube to determine the NOX amount on the basis of a change in color.

### Determination of the amount of THC emitted

It was confirmed visually and on a basis of the rotation number in an oscilloscope that the combustion reached a steady state. After 5 to 10 seconds, sampling of the exhaust gases was started by using a sampling bag. After ten seconds of the sampling, the sample gas was immediately introduced into a THC detecting tube to determine the THC amount on the basis of a change in color.

### Example 1

A fuel oil was a mixture of 50% by volume of commercially available premium gasoline, 35% by volume of MTBE and 15% by volume of toluene. The fuel oil had an initial boiling point (IBP) of 34.0 degrees C, a 10% distillation temperature (T10) of 53.0 degrees C, a 50% distillation temperature (T50) of 72.5 degrees C, a 90% distillation temperature (T90) of 136.0 degrees C, a 95% distillation temperature (T95) of 167 degrees C and a final boiling point (EP) of 172.5 degrees C. A gas fed at the start of the engine together with the fuel oil to the internal-combustion engine comprised 20.9% by volume of oxygen, 0.9% by volume of argon and 78.1% by volume of nitrogen. Thirty seconds after the start of the engine, it was visually confirmed that the operation of the engine reached a steady state. After further 30 seconds of the operation, the gas composition was adjusted so as to comprise 89.3% by volume of oxygen and 10.7% by volume of nitrogen and then the operation was further continued. The operation continued for 100 hours without any trouble. The internal-combustion engine was operated at a rotation number of 3000rpm, a compression ratio of 7.6 and a temperature of cooling water of 60 degrees C. The concentration of NOX emitted was 2ppm.

### Example 2

A fuel oil was a mixture of 65 % by volume of commercially available premium gasoline and 35% by volume of MTBE. The fuel oil had an initial boiling point (IBP) of 34.0 degrees C, a 10% distillation temperature (T10) of 55.0 degrees C, a 50% distillation temperature (T50) of 75.0 degrees C, a 90% distillation temperature (T90) of 130 degrees C, a 95% distillation temperature (T95) of 160 degrees C and a final boiling point (EP) of 174.5 degrees C. A gas fed at the start of the engine together with the fuel oil to the internal-combustion engine comprised 20.9% by volume of oxygen, 0.9% by volume of argon and 78.1% by volume of nitrogen. Thirty seconds after the start of the engine, it was visually confirmed that the operation of the engine reached a steady state. After further 30 seconds of the operation, the gas composition was adjusted so as to comprise 91.3% by volume of oxygen and 8.7% by volume of nitrogen and then the operation was further continued. The operation continued for 100 hours without any trouble. The internal-combustion engine was operated at a rotation number of 2000rpm, a compression ratio of 7.6 and a temperature of cooling water of 80 degrees C. The concentration of NOX emitted was 2ppm.

### Example 3

A fuel oil was a mixture of 65% by volume of commercially available premium gasoline and 35% by volume of isooctene. The fuel oil had an initial boiling point (IBP) of 34.0 degrees C, a 10% distillation temperature (T10) of 54.0 degrees C, a 50% distillation temperature (T50) of 76.0 degrees C, a 90% distillation temperature (T90) of 134.5 degrees C, a 95% distillation temperature (T95) of 163 degrees C and a final boiling point (EP) of 170.5 degrees C. A gas fed at the start of the engine together with the fuel oil to the internal-combustion engine comprised 20.9% by volume of oxygen, 0.9% by volume of argon and 78.1% by volume of nitrogen. Thirty seconds after the start of the engine, it was visually confirmed that the operation of the engine reached a steady state. After further 30 seconds of the operation, the gas composition was adjusted so as to comprise 90.4% by volume of oxygen and 9.6% by volume of nitrogen and then the operation was further continued. The operation continued for 100 hours without any trouble. The internal-combustion engine was operated at a rotation number of 2000rpm, a compression ratio of 7.6 and a temperature of cooling water of 80 degrees C. The concentration of NOX emitted was 2ppm.

### Example 4

A fuel oil was a mixture of 40% by volume of heavy cracked gasoline, 43% by volume of light cracked gasoline and 17% by volume of isooctene. The fuel oil had an initial boiling point (IBP) of 32.0 degrees C, a 10% distillation temperature (T10) of 51.5 degrees C, a 50% distillation temperature (T50) of 70.5 degrees C, a 90% distillation temperature (T90) of 140.0 degrees C, a 95% distillation temperature (T95) of 170 degrees C and a final boiling point (EP) of 180.5 degrees C. A gas fed at the start of the engine together with the fuel oil to the internal-combustion engine comprised 20.9% by volume of oxygen, 0.9% by volume of argon and 78.1% by volume of nitrogen. Thirty seconds after the start of the engine, it was visually confirmed that the operation of the engine reached a steady state. After further 30 seconds of the operation, the gas composition was adjusted so as to comprise 89.3% by volume of oxygen and 10.7% by volume of nitrogen and then the operation was further continued. The operation continued for 100 hours without any trouble. The internal-combustion engine was operated at a rotation number of 2000rpm, an intake negative pressure of 430mmHg, a compression ratio of 7.6 and a temperature of cooling water of 80 degrees C. The concentration of NOX emitted was 210ppm.

### Comparative Example 1

The internal-combustion engine 10 was operated in the same manner as in Example 2, except that the gas fed to the combustion chamber comprised air only, both when the engine was started and when the operation of the engine reached a steady state. The concentration of NOX emitted was 600ppm.

### Comparative Example 2

The internal-combustion engine 10 was operated in the same manner as in Example 2, except that the gas fed to the combustion chamber at the start of the engine comprised 70% by volume of oxygen, 29% by volume of nitrogen and 0.9% by volume of argon. Backfire occurred and the combustion became unstable. Therefore, the operation was stopped.

### Comparative Example 3

The internal-combustion engine 10 was operated in the same manner as in Example 4, except that the gas fed to the combustion chamber comprised air only, both when the engine was started and when the operation of the engine reached a steady state. The concentration of THC emitted was 700ppm.

As described above, the present internal-combustion engine continued to operate in a stable state and emitted NOX and THC in decreased amounts. Although the fuel oil based on the premium gasoline and the fuel oil based on the cracked gasoline were used in the Examples, fuel oils based on gas oil, and fuel oils based on kerosene oil may also be used to attain results similar to those in the Examples.

### EXPLANATION OF THE SYMBOLS IN THE DRAWINGS

- 1:: Fuel tank
- 2:: Air bomb
- 3:: Oxygen bomb
- 4:: Argon bomb
- 5:: Preserver
- 6:: Oxidation catalyst
- 7:: Cooling tube
- 10:: Internal-combustion engine

## Claims

1. An internal-combustion engine, **characterized in that** the engine comprises a combustion chamber which is adapted so that a fuel oil and gas comprising 65% by volume or more of oxygen are subjected to combustion in the combustion chamber.

2. The internal-combustion engine according to claim 1, wherein the engine is adapted so that gas comprising oxygen, nitrogen and optionally a noble gas is fed to the combustion chamber when starting the engine, and wherein an amount of the oxygen is 10 to 50% by volume relative to the total volume of the gas, an amount of the nitrogen is 50 to 90% by volume relative to the total volume of the gas, and an amount of the noble gas is 0 to 20% by volume relative to the total volume of the gas.

3. The internal-combustion engine according to claim 2, wherein the amount of the oxygen is 10 to 40% by volume relative to the total volume of the gas, the amount of the nitrogen is 60 to 90% by volume relative to the total volume of the gas, and the amount of the noble gas is 0 to 15% by volume relative to the total volume of the gas.

4. The internal-combustion engine according to any one of claims 1 to 3, wherein the fuel oil has an initial boiling point of 30 to 100 degrees C and a final boiling point of at least 150 degrees C and lower than 270 degrees C.

5. The internal-combustion engine according to any one of claims 1 to 3, wherein the fuel oil has an initial boiling point of 100 to 250 degrees C and a final boiling point of 270 to 410 degrees C.

6. The internal-combustion engine according to any one of claims 1 to 5, wherein the oxygen is fed from an oxygen bomb.

7. A method for operating the internal-combustion engine according to any one of claims 1 to 6, wherein gas comprising oxygen, nitrogen and optionally a noble gas is fed together with the fuel oil to a combustion chamber when starting the engine, wherein an amount of the oxygen is 10 to 50% by volume relative to the total volume of the gas, an amount of the nitrogen is 50 to 90% by volume relative to the total volume of the gas, and an amount of the noble gas is 0 to 20% by volume relative to the total volume of the gas; and then when the operation of the engine reaches a steady state, the amount of oxygen is adjusted to 65% by volume or more relative to the total volume of the gas.

8. The method according to claim 7, wherein when starting the internal-combustion engine, the amount of the oxygen is 10 to 40% by volume, the amount of the nitrogen is 60 to 90% by volume, and the amount of the noble gas is 0 to 15% by volume.

9. The method according to claim 7 or 8, wherein the gas comprises a noble gas in an amount of 0 to 10% by volume when the operation of the engine reaches a steady state.

10. The method according to any one of claims 7 to 9, wherein the gas comprises nitrogen in an amount of 0 to 35% by volume when the operation of the engine reaches a steady state.

11. The method according to any one of claims 7 to 10, wherein the fuel oil has an initial boiling point of 30 to 100 degrees C and a final boiling point of at least 150 degrees C and lower than 270 degrees C.

12. The method according to any one of claims 7 to 10, wherein the fuel oil has an initial boiling point of 100 to 250 degrees C and a final boiling point of 270 to 410 degrees C.

13. The method according to any one of claims 7 to 12, wherein the oxygen is fed from an oxygen bomb.

14. A diesel locomotive equipped with the internal-combustion engine according to any one of claims 1 to 6.
